Europäisches Patentamt

European Patent Office

Office européen des brevets

(19)

(11) Numéro de publication : **0 125 165**
**B1**

(12) **FASCICULE DE BREVET EUROPÉEN**

(45) Date de publication du fascicule du brevet :
11.11.87

(21) Numéro de dépôt : 84400833.4

(22) Date de dépôt : 25.04.84

(51) Int. Cl.⁴ : **G 01 B 11/14, G 01 B 11/24**

(54) **Procédé et appareillage de mesure des caractéristiques d'espacement d'un ensemble de franges planes contrastées.**

(30) Priorité : 05.05.83 FR 8307501

(43) Date de publication de la demande :
14.11.84 Bulletin 84/46

(45) Mention de la délivrance du brevet :
11.11.87 Bulletin 87/46

(84) Etats contractants désignés :
AT BE CH DE FR GB IT LI LU NL SE

(56) Documents cités :
GB-A- 1 404 311
US-A- 3 644 046
US-A- 3 762 818
PHYSICS IN MEDICINE AND BIOLOGY, vol. 24, no. 2,
mars 1979, The Institute of Physics, Londres (GB) S.S.
XENOFOS et al.:"Theoretical aspects and practical
applications of Moiré topography", pages 250-261

(73) Titulaire : **ETAT FRANCAIS représenté par Le Ministère de l'Urbanisme et du Logement LABORATOIRE
CENTRAL DES PONTS ET CHAUSSEES
58 boulevard Lefebvre
F-75732 Paris Cedex 15 (FR)**

(72) Inventeur : **Biot, Georges Stephan
3 rue des Terre Neuvas
F-44340 Bouguenais (FR)**

(74) Mandataire : **Hasenrader, Hubert et al
Cabinet BEAU DE LOMENIE 55, rue d'Amsterdam
F-75008 Paris (FR)**

**0 125 165**

## Description

L'invention concerne un procédé de mesure des caractéristiques d'espacement choisies d'un ensemble de franges planes contrastées. Ces caractéristiques peuvent être, selon l'utilisation qu'on veut en faire, l'espacement entre les franges bord à bord, l'espacement entre les milieux des franges, la largeur des franges, etc.

Le document US-A-3 644 046 fait connaître un appareillage sophistiqué et très particulier d'analyse de caractéristiques de franges d'un interféromètre, fondé sur l'analyse automatique d'une image électronique.

L'invention a pour but de proposer un procédé rustique, permettant, outre une grande rapidité de la mesure, son application à des objets très divers.

Ce but est atteint par le procédé décrit dans la revendication 1.

Le traitement numérique mentionné dans la revendication 1 dépend de la nature des caractéristiques qu'on veut calculer.

Avantageusement, à chaque pas, on compare la valeur de l'intensité mesurée à une valeur de mesure précédemment stockée dans une mémoire provisoire ; si l'écart entre les deux valeurs est supérieur à un écart de consigne prédéterminé, on remplace dans la mémoire provisoire la valeur précédente par la nouvelle valeur mesurée. Si l'écart entre les deux valeurs est inférieur à l'écart de consigne, on garde dans la mémoire provisoire la valeur précédemment stockée.

Avantageusement, chaque fois qu'on change le contenu de la mémoire provisoire, on enregistre dans une mémoire définitive la nouvelle valeur mesurée ainsi que les coordonnées du point correspondant, les points enregistrés correspondant aux bords des franges.

Les coordonnées des points de mesure comprennent l'abscisse du point mesurée dans la direction de mesure, laquelle peut être curviligne.

Selon un premier type de traitement, on calcule les différences des abscisses de points enregistrés consécutivement sur la mémoire définitive, ce qui donne les écartements des franges bord-à-bord, et les largeurs de franges, dans la direction de mesure. Ce type de traitement est notamment adapté à l'étude des tamis.

Selon un autre type de traitement, on calcule l'abscisse du milieu des couples consécutifs de points enregistrés consécutivement sur la mémoire définitive, et on calcule les différences des abscisses des milieux consécutifs, ce qui donne l'espacement des franges, milieu à milieu, dans la direction de mesure.

Ce type de traitement est notamment adapté à l'étude des photographies de moiré d'objets en relief, et particulièrement de granulats.

Le traitement numérique comprend une possibilité de classement des caractéristiques mesurées, et l'obtention d'histogrammes de répartitions.

L'invention concerne également un appareillage pour la mise en œuvre du procédé de l'invention. L'appareillage comprend :

des moyens comportant un émetteur pour diriger un faisceau lumineux bien confiné sur un point dudit ensemble,

une table portant ledit ensemble mobile dans deux directions, grâce à des moyens moteurs,

une cellule photo-sensible recevant une partie du faisceau modulée par ledit point,

une unité de traitement gérant le déplacement de la table mobile et faisant subir aux valeurs de l'intensité lumineuse mesurées par la cellule, en relation avec les coordonnées du point de mesure, un traitement numérique prédéterminé pour afficher en fin de mesure les caractéristiques d'espacement choisies, sur l'unité de visualisation.

D'autres avantages et caractéristiques de l'invention apparaîtront à la lecture de la description suivante, faite en référence aux dessins en annexe sur lesquels :

la figure 1 représente un appareillage destiné à obtenir une photographie de moiré,

la figure 2 représente les figures de moiré de différents reliefs de granulats,

la figure 3 représente l'appareillage de mesure conforme à l'invention.

On va maintenant décrire une utilisation de l'invention pour la détermination des reliefs. On sait que le moiré est un phénomène optique permettant de dessiner des courbes de niveau sur des objets quelconques et de déterminer ainsi leur hauteur. Ces courbes de niveau sont obtenues dans certaines conditions grâce à une grille plane régulière composée de bandes alternativement opaques et transparentes à la lumière disposée au-dessus des objets étudiés et une ou deux sources lumineuses quelconques éclairant les objets au travers de la grille ou réseau, les courbes devant être observées à l'aplomb de la grille.

Les courbes ne sont régulièrement espacées que lorsque :

sources lumineuses et observateur sont placés dans un plan parallèle à la grille et sur un axe perpendiculaire à la direction des lignes de la grille,

l'observateur est placé à l'aplomb du milieu de la grille à une hauteur h,

les sources sont écartées d'une distance 2d symétriquement de part et d'autre de l'observateur à la même hauteur h par rapport au réseau.

Dans ces seules conditions, les courbes de niveau sont espacées d'une hauteur

2

$$\Delta z = p(h/D) \text{ avec :}$$

$p = 1$ Nombre de couples de raies de la grille au mm

$h(mm)$ = hauteur de l'observateur par rapport à la grille

$d(mm)$ = distance de l'observateur aux sources lumineuses

Afin de procéder de façon rapide à l'étude de l'état de surface de route, il est proposé selon l'invention un appareillage de chantier, simple et robuste, permettant d'obtenir une photographie de moiré de la surface de la route.

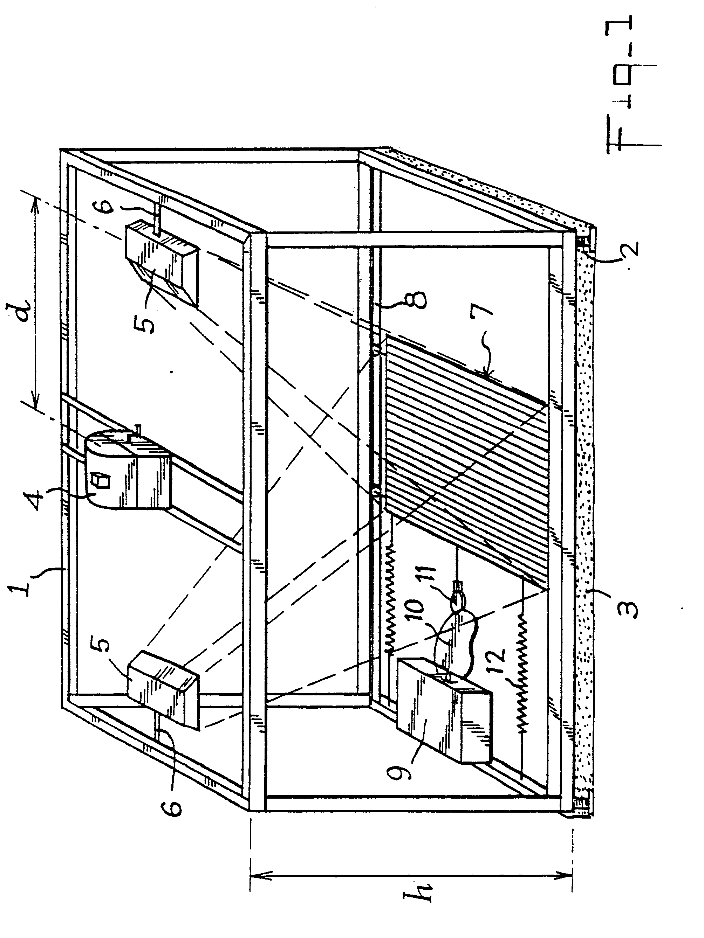

L'appareillage comprend une boîte rigide 1 étanche à la lumière. Sur la fig. 1, les parois latérales et supérieures de la boîte n'ont pas été représentées pour plus de clarté. Elle est supportée par quatre pieds 2 réglables en hauteur. Un joint souple 3 assure, dans les limites des réglages, l'étanchéité à la lumière au niveau du support étudié.

Sur la face supérieure de la boîte 1 sont placés :

l'appareil 4 de prise de vues réglable de l'extérieur de la boîte,

deux projecteurs 5 alimentés par groupe électrogène ou par batteries (non représentées).

La position des projecteurs 5 est réglable de part et d'autre de l'appareil de prise de vues 4 grâce à leurs supports 6.

Sur un plan parallèle à celui des projecteurs 5 et de l'appareil de prise de vues 4 est disposée la grille 7, le plus près possible des objets étudiés (surface de la route).

La grille 7 est posée sur un cadre mobile en translation le long de glissières longitudinales 8 dans lesquelles elle est guidée par des galets. La grille 7 est animée d'un mouvement régulier de va-et-vient assuré par un moteur 9 relié au cadre mobile par l'intermédiaire d'une came 10 entraînée par le moteur et suivie par un galet de friction 11 solidaire de la grille 7. Des ressorts 12 fixés à la boîte 1 rappellent la grille en direction de la came 10. Le déclenchement de l'appareil de prise de vues 4 est assuré par un dispositif commandé par un microcontact excité lors du passage du réseau en une position définie lors de la fabrication de la boîte.

La grille 7 mesure dans un exemple typique d'application 300 × 400 mm. Elle est fabriquée de deux manières différentes.

Selon une technique photographique, une grille « négative » mère est projetée sur une plaque de verre photosensible. Le facteur d'agrandissement permet de définir la période p de la grille.

Selon une technique mécanique, un fil de nylon calibré est tendu sous tension entre deux tiges filetées fixées sur un cadre très rigide. Le pas des tiges filetées donne directement la période p de la grille.

Les fils de nylon sont ensuite recouverts d'une couche de peinture noire mate. Le diamètre des fils est choisi de telle façon que diamètre fil + peinture = distance interfils.

Il est possible de modifier les conditions de prise de vue et les caractéristiques des réseaux pour obtenir des espacements en hauteur $\Delta z$ entre deux bandes, claires ou sombres successives, petits ou grands. On retiendra que $\Delta z$ minimal = 5 μm, et que $\Delta z$ maximal = quelques centimètres.

Dans une application particulière, la grille 7 comporte trois couples de raies par millimètre ($p = (1/3)$). Pour réduire la perte de luminosité du flux lumineux observé, il a été choisi un rapport largeur de raie transparente/largeur de raie opaque de 2 ; ainsi 44 % du flux émis par les projecteurs revient à l'observateur (i. e. l'appareil de prise de vues).

Afin d'éliminer l'image des raies de la grille sur les pellicules impressionnées, ainsi que pour supprimer des phénomènes optiques susceptibles de masquer le moiré, il a été choisi un temps de pose de 1/4 de seconde et on a agité la grille pendant la prise de vues, par un mouvement de va-et-vient, d'amplitude 5 cm et de vitesse 16 cm/seconde.

Les conditions opératoires choisies

h observateur = 530 mm

d observateur-projecteurs = 530 mm

p période du réseau = 1/3

permettent de dessiner des courbes de niveau espacées de 1/3 de mm.

Sur les photographies moiré, les objets examinés sont couverts d'une succession de bandes ou franges alternativement claires et sombres.

Deux bandes claires ou sombres successives sont espacées d'une même hauteur $\Delta z = p(h/d)$ définie plus avant. Seule peut varier la distance x mesurée sur la projection à l'horizontale de l'objet zébré, c'est-à-dire la distance mesurée sur la photographie.

Ainsi, des objets à fort relief vif seront recouverts de courbes moirées extrêmement serrées et fines. Des objets à relief très peu accentué auront des courbes moirées très larges et écartées. Il est donc possible de mesurer et caractériser différents types de reliefs rencontrés en mesurant l'écartement des courbes moirées sur les photographies moirées.

L'inclinaison θ des pentes des solides par rapport au plan support se calcule au moyen de la formule :

$$\text{tg } \theta = \Delta z / x \cdot R \text{ où}$$

3

$\Delta z = p \, (h/d)$ est fixé lors de la prise de vue

x = distance séparant deux franges successives de même type sur la photographie

R = rapport de réduction de la photographie.

A chaque x mesuré correspond donc un θ réel sur l'objet étudié. Il est facile de définir ensuite des familles de largeur intercourbes caractérisant des pentes de solides dont on calcule les valeurs extrêmes.

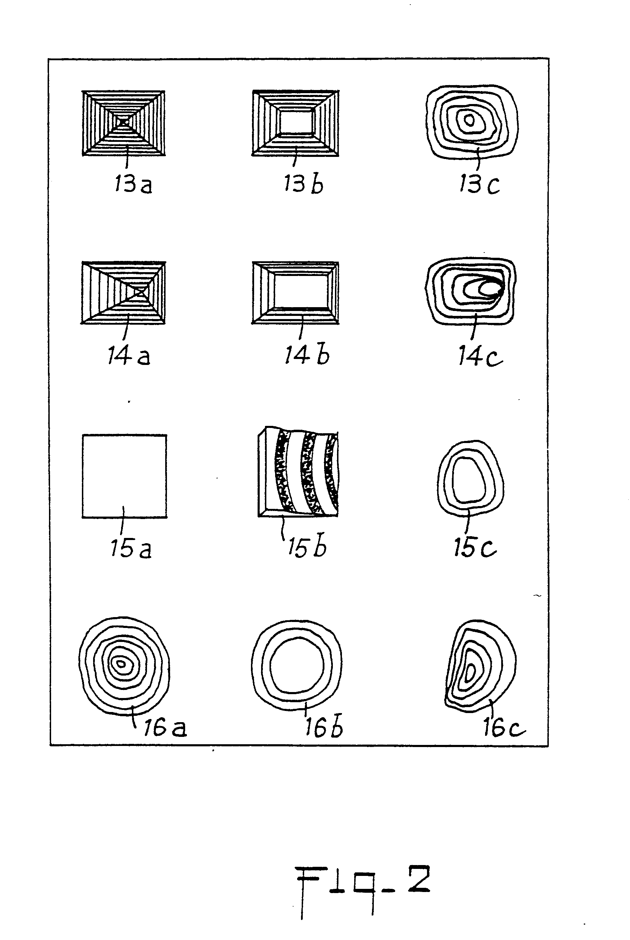

L'aspect des courbes obtenues pour différents types de relief est illustré sur la fig. 2 qui représente une photographie moiré de douze granulats : pyramides régulières 13, pyramides déjetées 14, granulats plats 15, granulats ronds 16, ces granulats étant soit intacts (indice a), étêtés (indice b) ou usés (indice c).

L'étude des photographies de moiré montre :

que la forme du moiré ne varie pas avec l'orientation des solides par rapport aux raies de la grille ;

que les franges sont d'autant plus fines et rapprochées que la pente du solide est forte ;

que les franges sont d'autant plus molles et arrondies que les solides sont émoussés ;

que lorsque la pente des solides dépasse une certaine valeur, il faut une loupe à très fort grossissement pour distinguer ou soupçonner la présence de raies sur les négatifs. Si dans l'exemple d'application, la qualité de l'objectif de l'appareil 4 ne permet pas de séparer des détails espacés de moins de 10 micromètres sur la photo, soit 60 micromètres sur le granulat, les franges étant écartées en altitude de 0,330 micromètres, ceci correspond à un angle de tg θ : 330/60 = 5,5, soit un angle de 79° au-dessus duquel on ne peut plus matérialiser le moiré sur les photographies.

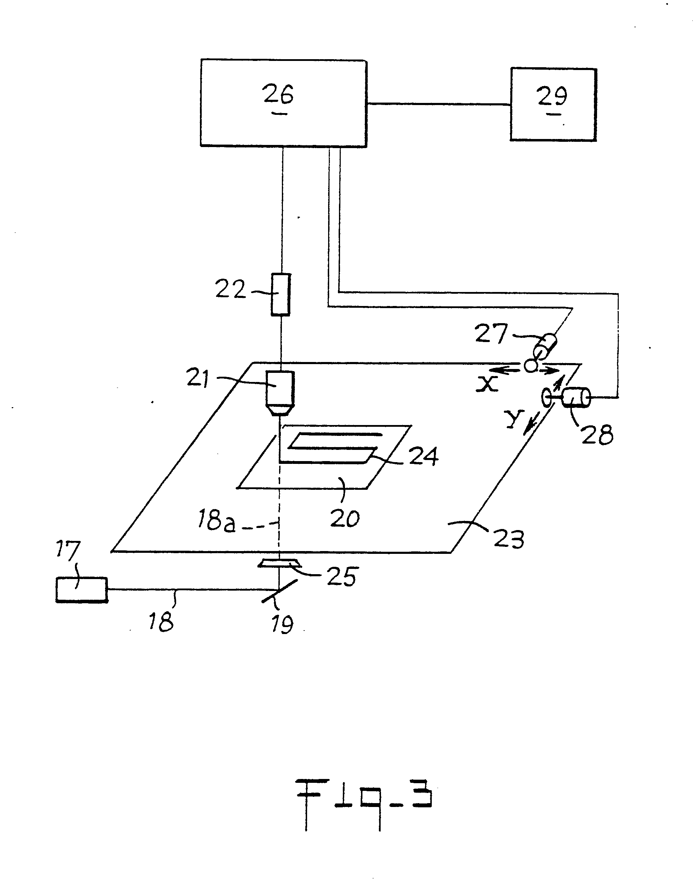

Les photographies moiré (ou tout autre ensemble de franges contrastées) sont étudiées à l'aide d'un appareil analyseur de franges de moiré (fig. 3). Cet ensemble mesure automatiquement les distances intercourbes sur les négatifs moiré. Un émetteur laser 17 envoie un faisceau lumineux focalisé 18 qui après réflexion sur un miroir 19, et passage dans un collimateur 25, traverse perpendiculairement la photographie moiré transparente 20. Un dispositif optique 21 disposé dans l'axe du faisceau réfléchi 18a grossit l'image avant de l'envoyer sur une micro-cellule photosensible 22.

L'épreuve étudiée 20 est fixée sur une table mobile 23 entraînée suivant deux directions x et y perpendiculaires. Le double mouvement est assuré de façon conventionnelle par deux moteurs 27, 28 pas à pas. Le déplacement est géré par un ordinateur 26 et permet de dessiner une grecque 24 balayant tout ou partie de la photographie moiré. Une étude statistique permet de définir la forme de cette grecque pour obtenir une image du relief se rapprochant le plus possible de la réalité. Dans un exemple particulier de réalisation, on réalise une vingtaine de traversées parallèles à l'axe X pour une plage explorée d'environ 45 mm × 35 mm.

A chaque pas (par exemple de cinq micromètres, la mesure complète durant environ une demi-heure), la valeur de l'intensité lumineuse reçue par la cellule 22 est mesurée et stockée dans une mémoire provisoire de l'ordinateur 26, en même temps que les coordonnées du point mesuré. Pour que deux valeurs différentes soient définitivement notées, il est nécessaire qu'elles diffèrent d'un écart de consigne défini lors de la mise en route de l'appareil. On voit qu'ainsi dans l'hypothèse où les franges sont parfaitement contrastées, c'est-à-dire où l'on n'a que des franges transparentes et des franges opaques bien définies, on ne note dans une mémoire définitive de l'ordinateur 26 que les points correspondant aux bords des franges.

En fait, pour tenir compte des plages de transition entre les franges transparentes et opaques, il est intéressant de ne stocker en mémoire que les points d'intensité lumineuse absorbée minimale (franges transparentes) et maximale (franges opaques).

Un ensemble informatique et un programme simple permettent de traiter les valeurs conservées en mémoire. Il suffit de définir les limites des classes de largeurs de courbes (donc des pentes) que l'on désire pour qu'apparaissent sur tout support visuel ou graphique 29, les histogrammes suivants :

normal ou cumulé des % de raies entrant dans les classes

normal ou cumulé des % de largeurs de raies entrant dans les classes

normal ou cumulé des % de longueurs de chaussées (longueur de coupe) occupées par les différentes classes définies.

Dans un exemple particulier d'application, il a été défini quatre classes de granulats caractérisés par les pentes de leurs faces.

Classe I : granulats à relief fort et vif de pente supérieure à 70°

Classe II : granulats à relief fort mais arrondi, de pente comprise entre 70° et 45°

Classe III : granulats à relief très arrondi, très usé, de pente comprise entre 45° et 10°

Classe IV : granulats totalement usés ou arrachés, de pente inférieure à 10°.

Le suivi de l'évolution d'une chaussée est donc réalisé en étudiant les variations des pourcentages des quatre classes définies. On dispose ainsi d'une méthode rapide et non destructive de suivi et de mesure de l'évolution des granulats incorporés dans les couches superficielles de chaussées.

Ce suivi est d'autant plus utile qu'on sait que l'augmentation des coûts des produits pétroliers a conduit de nombreux maîtres d'œuvres à réutiliser la technique des enduits superficiels pour remettre en état la surface de certaines chaussées.

Dans certains cas, le trafic routier supporté par ces routes est tel que la région ne dispose d'aucun granulat répondant aux spécifications définies par l'Administration. L'étude de l'évolution de granulats possédant des caractéristiques différentes et supportant des trafics réels (planches de 50 à 100 m² disposées sur des axes à grande circulation) ou des trafics simulés (planches de 2 à 50 m² disposées sur une piste du manège de fatigue) doit permettre de vérifier le bien-fondé des spécifications ou peut-être de les modifier afin d'éviter de longs et coûteux transports de « bons » granulats lorsqu'il est possible d'utiliser de « moins bons » éléments présents à proximité du chantier.

Le mode opératoire est le suivant :

Après mise hors circulation de la chaussée, celle-ci est nettoyée. Les mesures telles que hauteur de sable, stéréophotographies et empreintes sont exécutées si besoin est.

Les zones étudiées par moiré photographie (50 × 50 cm environ) sont recouvertes de deux fines couches de peinture blanche destinée à réfléchir la lumière envoyée par les projecteurs. La peinture est composée d'un mélange à poids égaux d'oxyde de titane et d'alcool éthylique à 90° auxquels on ajoute 0,1 % de colorant valchrome noir.

Cette peinture sèche instantanément et disparaît après passage de quelques véhicules. Deux photographies de chaque zone sont prises afin de pouvoir conserver une épreuve en photothèque. Le numérotage des épreuves est assuré par des lettres placées dans un coin du champ photographié et au-dessus de la grille.

Le principe développé peut s'appliquer à l'étude de tout autre relief horizontal ou non.

L'appareil de prise de vue est dans les applications précitées un appareil photographique et les mesures sont effectuées sur les épreuves transparentes négatives. Il est possible de remplacer l'appareil photographique par une caméra type télévision comportant au niveau du foyer image de l'objectif une multitude de cellules photosensibles disposées régulièrement. L'image « électronique » obtenue peut être étudiée en temps réel en adaptant simplement le système informatique de traitement.

La méthode peut aussi être appliquée pour classer ou reconnaître des objets sortant d'une chaîne de fabrication.

La simple comparaison automatique ou non des clichés moiré obtenus dans des conditions identiques sur un objet témoin et sur un objet analysé permet de déterminer à coup sûr si la fabrication est ou non conforme.

C'est ainsi que la chaîne de lecture destinée à la mesure des espaces interfranges de moiré peut être utilisée pour le contrôle des tamis servant aux analyses granulométriques.

Les fonds de tamis sont constitués d'un maillage régulier fabriqué à partir du tissage de fils métalliques. Au cours de l'usure des tamis, les fils se détendent et les dimensions des mailles varient. Les variations ne doivent pas dépasser un certain pourcentage et, régulièrement, il faut contrôler les tamis afin de vérifier s'ils répondent encore aux normes exigées. Le contrôle est effectué en mesurant les distances qui séparent les fils métalliques à l'aide d'un agrandisseur optique disposé à l'aplomb d'une table x y supportant le tamis étudié.

Le contrôle d'un nombre très réduit de mailles (30 par tamis) demande un temps extrêmement long puisque deux opérateurs ne peuvent contrôler au maximum que 4 tamis par jour.

Selon une variante du procédé selon l'invention, l'examen direct des tamis est remplacé par l'étude de leur photographie.

Les tamis contrôlés sont photographiés avec un appareil fournissant des épreuves négatives d'environ 4 × 5 cm. La photographie est prise à une trentaine de centimètres du tamis plaqué sur une vitre transparente (fenêtre normale). Une feuille translucide blanche est disposée entre la fenêtre et le tamis. Les fils du tamis apparaissent ainsi nettement et noirs. Les mailles laissent passer la lumière et sont blanches. Cette technique permet d'obtenir une image extrêmement contrastée sur une pellicule à haute résolution dont le grain permet de discerner sur l'émulsion des détails éloignés de 1,5 micromètres. Les prises de vue sont effectuées avec une ouverture minimum du diaphragme afin d'éliminer tous les phénomènes de vignettage.

Lors de la prise de vue, un double décimètre est plaqué horizontalement sur le fond du tamis et face à l'appareil. Le réglet est placé parallèlement à un fil du tamis. L'appareil de prise de vue est orienté pour que le bord de la photo soit rigoureusement parallèle à la tranche du réglet portant les graduations millimétriques.

Les conditions de prise de vue permettent d'obtenir une image particulièrement nette et contrastée de la grille constituant le fond du tamis. Les fils apparaissent en clair alors que les vides qu'ils limitent sont noirs.

Chaque photographie portant l'image d'une règle graduée, il est facile de déterminer le coefficient de réduction photographique à partir duquel on calcule les distances réelles observées sur la grille.

La photographie est fixée sur la table x y mobile en prenant soin de faire coïncider l'axe horizontal de l'écran de visualisation avec l'image blanche d'un fil photographié.

Il suffit ensuite de programmer le déplacement de la table et de mettre en marche la chaîne.

Le programme informatique de traitement permet de retenir les abscisses de tous les bords des lignes blanches (bords des fils dans le cas d'un tamis) et donc d'obtenir ensuite les dimensions suivantes :

diamètre des fils

largeur des mailles

Les histogrammes des répartitions des mesures effectuées sont ensuite calculés.

Cette technique permet de tester en quinze minutes environ une surface de tamis d'environ 205 × 154 mm ce qui correspond dans certains cas à plusieurs milliers de mailles. Ces dimensions pouvant varier dans un sens ou dans l'autre suivant l'objectif utilisé et le facteur d'agrandissement choisi.

**Revendications**

1. Procédé de mesure de caractéristiques d'espacement choisies d'un ensemble (20) de franges planes contrastées (24), caractérisé en ce que : on dirige un faisceau lumineux bien confiné (18a) sur un point dudit ensemble de manière qu'une partie de ce faisceau modulée par ledit point après avoir traversé ledit ensemble (20) soit reçue sur une cellule de lecture (22) ; on effectue un déplacement relatif pas à pas dudit ensemble (20) par rapport au faisceau lumineux (18a) de manière à balayer selon une direction de mesure une région dudit ensemble (20) ; on mesure à chaque pas la valeur de l'intensité lumineuse reçue par la cellule (22) en relation avec les coordonnées du point mesuré, et on fait subir à ce couple de résultats un traitement numérique prédéterminé pour obtenir en fin de mesure les caractéristiques d'espacement choisies.

2. Procédé selon la revendication 1, caractérisé en ce qu'à chaque pas, on compare la valeur de l'intensité mesurée à une valeur de mesure précédemment stockée dans une mémoire provisoire ; si l'écart entre les deux valeurs est supérieur à un écart de consigne prédéterminé, on remplace dans la mémoire provisoire la valeur précédente par la nouvelle valeur mesurée ; si l'écart entre les deux valeurs est inférieur à l'écart de consigne, on garde dans la mémoire provisoire la valeur précédemment stockée.

3. Procédé selon la revendication 2, caractérisé en ce que chaque fois qu'on change le contenu de la mémoire provisoire, on enregistre dans une mémoire définitive la nouvelle valeur mesurée ainsi que les coordonnées du point correspondant.

4. Procédé selon la revendication 3, caractérisé en ce que les coordonnées des points de mesure comprennent l'abscisse du point mesurée dans la direction de mesure, et en ce qu'on calcule les différences des abscisses des points enregistrés consécutivement sur la mémoire définitive.

5. Procédé selon la revendication 3, caractérisé en ce que les coordonnées des points de mesure comprennent l'abscisse du point mesurée dans la direction de mesure, en ce qu'on calcule l'abscisse du milieu de couples consécutifs de points enregistrés consécutivement sur la mémoire définitive, et en ce qu'on calcule les différences des abscisses des milieux consécutifs.

6. Procédé selon l'une quelconque des revendications 4 ou 5, caractérisé en ce qu'on détermine ensuite des histogrammes de répartitions des derniers résultats calculés.

7. Procédé selon l'une quelconque des revendications précédentes, caractérisé en ce que l'ensemble de lignes planes contrastées est une photographie d'un objet à réseau, tel qu'un tamis.

8. Procédé selon l'une quelconque des revendications précédentes, caractérisé en ce que l'ensemble de lignes planes contrastées est une photographie de figures de moiré d'objets dont on veut mesurer les caractéristiques de relief, tels que des granulats.

9. Appareillage de mesure de caractéristiques d'espacement choisies d'un ensemble (20) de franges planes contrastées (24) pour mettre en œuvre le procédé selon l'une quelconque des revendications 1 à 8, caractérisé en ce qu'il comprend :
des moyens (17, 19, 25) comportant un émetteur (17) pour diriger un faisceau lumineux bien confiné (18a) sur un point de mesure dudit ensemble (20),
une table mobile (23) portant et déplaçant ledit ensemble (20) dans deux directions (X, Y), grâce à des moyens moteurs (27, 28),
une cellule photosensible (22) recevant une partie du faisceau (18a) modulée par ledit point après avoir traversé ledit ensemble (20),
une unité de traitement (26) gérant le déplacement de la table mobile (23) et faisant subir aux valeurs de l'intensité lumineuse mesurées par la cellule (22), en relation avec les coordonnées du point de mesure, un traitement numérique prédéterminé pour afficher en fin de mesure les caractéristiques d'espacement choisies sur une unité de visualisation (29).

10. Appareillage pour la photographie de moiré d'une surface, destiné à la mise en œuvre du procédé de la revendication 8, caractérisé en ce qu'il comprend dans une boîte (1) étanche à la lumière et disposée sur ladite surface, une grille (7) animée d'un mouvement latéral de va-et-vient à faible distance de la surface, un appareil de prise de vues (4) et deux projecteurs (5) disposés latéralement.

**Claims**

1. A method of measuring selected spacing characteristics in a pattern (20) of contrasted plane fringes (24), characterized in that a light beam (18a) is focused on a point of said fringe pattern such that a part of said beam, modulated by said point after having gone through said pattern (20), is picked up by a photocell (22) ; said pattern (20) is made to move in gradual steps in relation to the light beam (18a) such as to scan a specific area of said pattern (20) in one direction of measurement ; the luminous intensity picked up by the photocell (22) is measured at each step, referred to the coordinates of the point being measured, so as to constitute a data pair, and the data pair thus obtained is digitally processed as required to obtain the selected spacing characteristics at the end of the measurement run.

2. Method according to claim 1, characterized in that the measured intensity at each step is compared with a measured value previously stored in a temporary store ; if the difference between the two values is greater than a given predetermined deviation, the new measured value is substituted for the previous value in the temporary store ; if the difference between the two values is less than that of the specified deviation, the previous value is kept in the temporary store.

3. Method according to claim 2, characterized in that every time the content of the temporary store is changed, the new measured value together with the coordinates of the matching point are recorded in a permanent store.

4. Method according to claim 3, characterized in that the coordinates of the measured points include the x- coordinate of the point taken in the direction of scanning, and in that the differences between the x-coordinates of the points consecutively recorded in the permanent store are computed.

5. Method according to claim 3, characterized in that the coordinates of the measured points include the x-coordinate of the point taken in the direction of scanning, and in that the x-coordinate of the middle of the consecutive point pairs consecutively recorded in the permanent store is computed, and in that the differences between the x-coordinates of the consecutive mid-points are computed.

6. Method according to any one of claims 4 or 5, characterized in that histograms are then established of the distribution of the last computed results.

7. Method according to any one of the preceding claims, characterized in that the pattern of contrasted plane lines examined is in fact a photograph of a grid-type of object such as a sieve.

8. Method according to any one of the preceding claims, characterized in that the pattern of contrasted plane lines examined is in fact a photograph of moiré images of objects, such as grains of an aggregate, the relief characteristics whereof one wants to measure.

9. A measuring device for measuring selected spacing characteristics in a pattern (20) of contrasted plane fringes (24), to carry out the process according to any one of claims 1 to 8, characterized in that it comprises :

means (17, 19, 25) comprising an emitter (17) for focusing a light beam (18a) on a measured point of said pattern (20),

a movable tray (23) operable to carry and move said assembly (20) in two directions (X, Y), thanks to motive means (27, 28),

a photo-sensitive cell (22) receiving a part of the beam (18a) modulated by said point after having gone through said pattern (20),

a processing unit (26) controlling the motion of the movable tray (23) and operable to carry out the digital computation on the luminous values measured by the photocell (22), in relation to the coordinates of the measured point, required to give a readout of the selected spacing characteristics on a visual display (29) upon completion of the measurements.

10. Apparatus for making moiré photographs of a surface for carrying out the process of claim 8, characterized in that it comprises in a light-sealed box (1) placed on said surface, a grating (7) imparted with a lateral to-and-fro motion at a small distance of the surface, a picture taking apparatus (4) and two lights (5) situated laterally.


**Patentansprüche**

1. Verfahren zur Messung der charakteristischen ausgewählten Abstände einer Gruppe (20) ebener kontrastierender Streifen (24), dadurch gekennzeichnet, daß man einen gut gebündelten Lichtstrahl (18a) auf einen Punkt der Gruppe so lenkt, daß ein Teil des von diesem Punkt modulierten Bündels nach dem Durchgang durch die Gruppe (20) von einer Lesezelle (22) empfangen wird ; man führt eine relative Schritt für Schritt Bewegung der Gruppe (20) bezüglich des Lichtstrahls (18a) so durch, daß man sich in einer Meßrichtung in einem Gebiet der Gruppe (20) vortastet ; man mißt bei jedem Schritt den Wert der Lichtintensität, der von der Zelle (22) empfangen wird gemeinsam mit den Koordinaten des Meßpunktes und unterwirft dieses Resultatpaar einer vorgegebenen numerischen Behandlung, um schließlich die gewählten charakteristischen Abstände zu erhalten.

2. Verfahren nach Anspruch 1, dadurch gekennzeichnet, daß bei jedem Schritt der Wert der gemessenen Intensität mit einem vorher gemessenen, in einem provisorischen Speicher gespeicherten Wert verglichen wird, und wenn der Abstand zwischen den beiden Werten größer ist als ein festgelegter vorbestimmter Abstand, im provisorischen Speicher der vorhergehende Wert durch den neu gemessenen Wert ersetzt wird ; und daß, wenn der Abstand zwischen den beiden Werten kleiner ist als der vorbestimmte Abstand, der vorhergehend gespeicherte Wert im provisorischen Speicher erhalten wird.

3. Verfahren nach Anspruch 2, dadurch gekennzeichnet, daß jedesmal, wenn der Inhalt des provisorischen Speichers geändert wird, in einem endgültigen Speicher der neu gemessene Wert mit den Koordinaten des entsprechenden Punktes gespeichert wird.

4. Verfahren nach Anspruch 3, dadurch gekennzeichnet, daß die Koordinaten der Meßpunkte die Abszisse des Meßpunktes in Meßrichtung umfassen und daß man die Differenzen der Abszissen der aufeinanderfolgend im definitiven Speicher gespeicherten Punkte berechnet.

5. Verfahren nach Anspruch 3, dadurch gekennzeichnet, daß die Koordinaten der Meßpunkte die Abszisse des Meßpunktes in der Meßrichtung umfassen und daß man die Abszisse der Mitte aufeinanderfolgender Paare von aufeinanderfolgend im endgültigen Speicher gespeicherten Punkten berechnet und daß man die Differenzen der Abszissen aufeinanderfolgender Mitten berechnet.

6. Verfahren nach einem der Ansprüche 4 oder 5, dadurch gekennzeichnet, daß man in der Folge Histogramme der Verteilungen der letzten berechneten Resultate bestimmt.

7. Verfahren nach einem der vorstehenden Ansprüche, dadurch gekennzeichnet, daß die Gesamtheit der ebenen kontrastierenden Linien eine Fotografie eines Forschungsobjekts, wie ein Sieb, ist.

8. Verfahren nach einem der vorstehenden Ansprüche, dadurch gekennzeichnet, daß die Gesamtheit der ebenen kontrastierenden Linien eine Fotografie moirierter Gegenstände, deren Reliefeigenschften man messen will, wie Granulate, ist.

9. Vorrichtung zur Messung der Charakteristiken gewählter Abstände einer Gesamtheit (20) ebener kontrastierender Streifen (24), um das Verfahren nach einem der Ansprüche 1 bis 8 durchzuführen, dadurch gekennzeichnet, daß sie :

Mittel (17, 19, 25), die einen Strahler (17) um einen gut gebündelten Lichtstrahl (18a) auf einen Meßpunkt der Gruppe (20) zu richten, aufweisen,

einen beweglichen Tisch (23), der die Gruppe (20) trägt und in zwei Richtungen (X, Y) mittels zweier Motormittel (27, 28) verschiebt,

eine Fotozelle (22), die einen durch den Punkt modulierten Teil des Bündels (18a) empfängt, nachdem es durch die Gruppe (20) gelangt ist,

eine Verarbeitungseinheit (26), die die Verschiebungen des beweglichen Tisches (23) mitgeteilt erhält und die die durch die Zelle (22) gemessenen Lichtintensitätswerte gemeinsam mit den Koordinaten des Meßpunktes einer numerischen vorbestimmten Verarbeitung unterwirft, um die gewählten Charakteristiken der Abstände auf einer Anzeigeeinheit (29) anzuzeigen, enthält.

10. Vorrichtung, um eine Oberfläche moiriert zu fotografieren, dazu bestimmt, das Verfahren nach Anspruch 8 durchzuführen, dadurch gekennzeichnet, daß sie in einer lichtdichten Schachtel (1) und auf dieser Oberfläche einen Rost (7), welcher einer lateralen Hin- und Herbewegung in geringer Distanz über der Oberfläche unterworfen ist, sowie einen Aufnahmeapparat (4) und zwei seitlich vorgesehene Scheinwerfer (5) aufweist.

Fig. 1

13 a     13 b     13 c

14 a     14 b     14 c

15 a     15 b     15 c

16 a     16 b     16 c

Fig. 2

Fig-3